# FASCICULE DE BREVET EUROPEEN

(11) **EP 3 393 700 B1**
(45) Date de publication et mention de la délivrance du brevet: **11.12.2019**
(21) Numéro de dépôt: 16826422.4
(22) Date de dépôt: 20.12.2016
(51) Int. Cl.: B22F 3/105, B28B 1/00, B29C 64/20, B29C 64/153, B33Y 10/00, B33Y 30/00

(54) **ATELIER DE FABRICATION ADDITIVE AVEC ENCEINTES DE CONFINEMENT SUCESSIVEMENT IMBRIQUÉES**
PRODUKTIONSANALGE MIT ZWEI INEINANDER EINGESETZTE ABGESCHLOSSENE RAÜME
MANUFACTURING PLANT WITH CONFINMENT ENCLOSURES SUCCESSIVELY NESTED

(30) Priorité: 23.12.2015 FR 1563241
(43) Date de publication de la demande: 31.10.2018
(73) Titulaire: Compagnie Générale des Etablissements Michelin, 63000 Clermont-Ferrand (FR)
(72) Inventeur: EFFERNELLI, Albin, 63040 Clermont-Ferrand Cedex 9 (FR); WALRAND, Gilles, 63040 Clermont-Ferrand Cedex 9 (FR); PIALOT, Frédéric, 63040 Clermont-Ferrand Cedex 9 (FR); GEAY, Christian, 63040 Clermont-Ferrand Cedex 9 (FR)
(74) Mandataire: Barascou, Frédéric
(86) Numéro de dépôt international: PCT/FR2016/053587
(87) Numéro de publication internationale: WO 2017/109395

(56) Documents cités:
- EP-A2- 1 700 686
- EP-A2- 1 961 514
- EP-A2- 2 926 927
- US-B1- 6 940 037

## Description

L'invention se situe dans le domaine de la fabrication additive à base de poudre par frittage ou fusion des grains de cette poudre à l'aide d'un faisceau énergétique à rayonnement électromagnétique, comme par exemple un faisceau laser, et/ou d'un faisceau de particules, comme par exemple un faisceau d'électrons.

Plus précisément, l'invention concerne le confinement d'un atelier de fabrication additive comprenant une pluralité de machines de fabrication additive et le transport confiné des plateaux de fabrication additive au sein d'un tel atelier.

Lors de la mise en oeuvre d'un procédé de fabrication additive à l'intérieur de l'enceinte de fabrication d'une machine de fabrication additive, une première couche de poudre est déposée sur un plateau de fabrication additive monté coulissant à l'intérieur d'une chemise de fabrication maintenue en position à l'intérieur de l'enceinte de fabrication. Ensuite, cette première couche de poudre est consolidée selon un motif prédéterminé à l'aide de l'un des faisceaux énergétiques précités. Puis, le plateau de fabrication est abaissé dans la chemise de fabrication de manière à permettre le dépôt et la consolidation d'une deuxième couche de poudre. Enfin, les étapes d'abaissement du plateau puis de dépôt et de consolidation des couches de poudre se succèdent jusqu'au dépôt et à la consolidation de la dernière couche de poudre utile à la fabrication des pièces à réaliser.

Une fois le cycle de fabrication additive terminé, les pièces fabriquées sont reliées au plateau de fabrication additive par leur embase, et les pièces fabriquées se retrouvent noyées au milieu d'une importante quantité de poudre non consolidée.

Pour récupérer les pièces fabriquées, il est nécessaire d'extraire le plateau de fabrication additive de l'enceinte de fabrication de la machine. De préférence, le plateau de fabrication additive et les pièces fabriquées sont extraits de l'enceinte de fabrication à l'aide d'un container venant se positionner sous la chemise de fabrication. Avantageusement, ce container permet aussi de récupérer et de transporter la poudre non consolidée qui entoure les pièces fabriquées.

En vue de la mise en oeuvre d'un nouveau cycle de fabrication additive, un nouveau plateau propre doit être introduit et mis en place dans l'enceinte de fabrication de la machine de fabrication additive.

Lors de l'utilisation d'une pluralité de machines de fabrication additive pour la production de pièces à l'échelle industrielle, les opérations d'extraction et d'introduction des plateaux de fabrication additive ne peuvent pas être réalisées manuellement par des opérateurs.

D'une part, les opérateurs seraient soumis à la toxicité de certains composants des poudres de fabrication additive de manière répétée. Et d'autre part, en étant réalisées manuellement, ces opérations prendraient trop de temps.

Aussi, et comme cela est par exemple présenté dans le document US-6824714, des moyens de convoyage à chaînes peuvent être utilisés pour conduire de manière automatisée des ensembles container/plateau vides dans l'enceinte de fabrication d'une machine de fabrication additive et pour extraire de cette enceinte les ensembles container/plateau utilisés avec les pièces fabriquées et la poudre non consolidée qui les entoure.

Selon un premier inconvénient de la solution décrite dans le document US-6824714, les ensembles container/plateau remplis de poudre non consolidée sont extraits de la machine et convoyés sans protection ou moyens visant à empêcher que des grains de poudre non consolidée se répandent dans l'atelier.

Etant donné la toxicité de certains composants des poudres de fabrication additive utilisées industriellement, notamment pour la fabrication de pièces métalliques, la solution présentée dans le document US-6824714 présente des dangers pour l'environnement et des risques hygiéniques pour les personnes amenées à circuler dans l'atelier, et cela même si ces personnes portent les équipements de protection appropriés, tels des combinaisons, des lunettes et des masques de protection.

Enfin, selon un autre inconvénient de la solution décrite dans le document US-6824714, les moyens automatisés d'introduction et d'extraction des ensembles container/plateau de fabrication additive ne permettent pas de préserver l'atmosphère inerte ou contrôlée nécessaire au procédé de fabrication additive mis en oeuvre à l'intérieur de l'enceinte de fabrication de la machine de fabrication additive.

Par conséquent, avec la solution automatisée présentée dans le document US-6824714, il est nécessaire de prévoir une étape d'inertage ou de conditionnement de l'air présent à l'intérieur de l'enceinte de fabrication après chaque étape d'extraction d'un ensemble container/plateau de fabrication additive. D'un point de vue industriel, cette étape d'inertage ou de conditionnement de l'air réduit le temps effectif d'utilisation des machines de fabrication additive et donc les capacités de production.

Le document EP 2 926 927 décrit un appareil de fabrication par méthode additive à fonctionnement automatisé et confiné comprenant une enceinte de confinement à l'intérieur de laquelle est installée une machine de fabrication additive comprenant une enceinte de fabrication, un dispositif d'alimentation, un dispositif de convoyage d'ensembles container/plateau (C) de fabrication additive et un dispositif de nettoyage. De plus D1 décrit qu'après la formation de l'objet l'ensemble conteneur/ plateau est scellé par fusion de la couche superficielle de poudre appliquée au dessus de la pièce avant le convoyage.

Le document EP 1 700 686 décrit un appareil de fabrication par méthode additive dans lequel un dispositif d'alimentation et un circuit d'alimentation permettent d'alimenter les différentes machines de l'atelier avec une poudre de fabrication additive prête à être utilisée en fabrication additive. Cependant bien que le dispositif d'alimentation ne soit pas dans une enceinte de confinement contenant également la machine de fabrication additive, l'alimentation en poudre de fabrication se fait de manière automatisée de confinée.

Le document EP 1 961 514 décrit un atelier de fabrication additive à fonctionnement automatisé et confiné comprenant une pluralité de machines de fabrication additive, chaque machine comprenant une enceinte de fabrication, un dispositif d'alimentation et un circuit d'alimentation permettant d'alimenter de manière automatisée les différentes machines de l'atelier, un dispositif de convoyage d'ensembles container/plateau (C) circulant entre les différentes machines et des dispositifs de traitements, chaque dispositifs étant chacun dans une enceinte étanche spécifique avec port d'entrée/sortie.

Enfin, pour répondre à certaines règles destinées à protéger l'environnement et la santé des personnes travaillant dans des ateliers de fabrication additive, il existe aussi un besoin d'améliorer les conditions sanitaires d'utilisation des machines de fabrication additive.

Aussi, la présente invention a pour objectif de parer à au moins l'un des inconvénients identifiés dans l'art antérieur et de répondre aux besoins industriels précités.

A cet effet, l'invention a pour objet un atelier de fabrication additive à fonctionnement automatisé et confiné.

Selon l'invention décrite par la revendication 1, cet atelier comprend une enceinte de confinement à l'intérieur de laquelle est installée une pluralité de machines de fabrication additive, chaque machine comprenant une enceinte de fabrication et permettant de fabriquer des pièces de manière automatisée et confinée à l'intérieur de cette enceinte.

De plus, cet atelier comprend à l'intérieur de l'enceinte de confinement un dispositif d'alimentation et un circuit d'alimentation permettant d'alimenter de manière automatisée et confinée les différentes machines de l'atelier avec une poudre de fabrication additive prête à être utilisée en fabrication additive.

Ensuite, à l'intérieur de l'enceinte de confinement, cet atelier comprend un dispositif de convoyage d'ensembles container/plateau de fabrication additive comprenant au moins une enceinte de convoyage circulant entre les différentes machines afin d'approvisionner de manière automatisée et confinée les différentes machines de l'atelier en plateaux propres et de récupérer de manière automatisée et confinée les plateaux ayant été utilisés par ces machines.

Enfin, à l'intérieur de l'enceinte de confinement, cet atelier comprend aussi un dispositif de nettoyage comprenant au moins une enceinte de nettoyage et permettant de nettoyer de manière automatisée et confinée les plateaux de fabrication additive dans cette enceinte de nettoyage.

Grâce à l'automatisation complète de l'atelier selon l'invention, il est possible de piloter le fonctionnement de l'atelier depuis l'extérieur de l'enceinte de confinement, et ainsi de limiter la présence humaine dans l'atelier aux seules opérations de maintenance et de dépannage.

Avantageusement, en transportant de manière confinée les ensembles container/plateau de fabrication additive entre les différentes machines de fabrication additive et le dispositif de nettoyage, on évite de contaminer l'atelier et son environnement avec des particules pouvant être toxiques pour l'homme.

Selon un avantage important, le transport confiné des ensembles container/plateau de fabrication additive permet d'envisager un transport sous atmosphère contrôlée ou inerte afin d'éviter un nouveau conditionnement de l'air contenu dans l'enceinte de fabrication d'une machine de fabrication additive après chaque étape d'extraction et d'introduction d'un ensemble container/plateau de fabrication additive dans cette enceinte.

L'invention prévoit aussi un procédé de confinement d'un atelier de fabrication additive selon l'invention.

Selon ce procédé, l'air situé à l'intérieur de l'enceinte de confinement est maintenu à une pression inférieure à l'air situé à l'extérieur de l'enceinte de confinement. Ainsi, le confinement procuré par l'étanchéité de l'enceinte de confinement est amélioré par les différences de pression entre l'intérieur et l'extérieur de l'enceinte.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue schématique et aérienne d'un atelier de fabrication additive selon l'invention,
- la figure 2 est une vue schématique de côté d'un atelier de fabrication additive selon l'invention,
- la figure 3 est une vue schématique en perspective d'un dispositif de convoyage d'ensembles container/plateau de fabrication additive selon l'invention,
- la figure 4 est une vue de détail de la figure 1,
- la figure 5 est une vue schématique en coupe d'un dispositif de convoyage d'ensembles container/plateau de fabrication additive selon l'invention, et
- la figure 6 est une vue schématique en coupe illustrant l'extraction ou l'introduction d'un ensemble container/plateau de fabrication additive dans l'enceinte de fabrication d'une machine de fabrication additive avec un dispositif de convoyage selon l'invention.

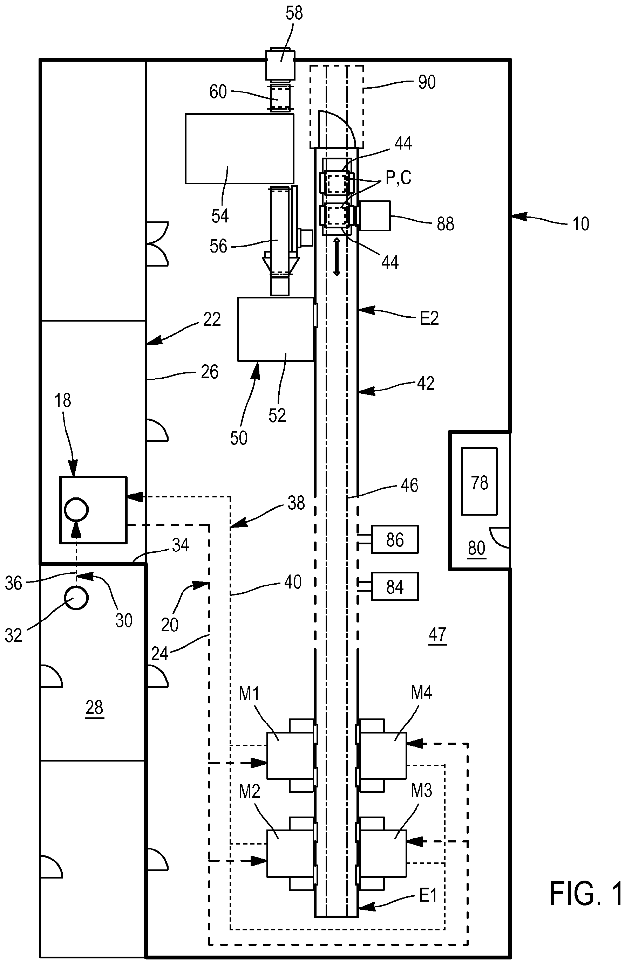

Comme l'illustre la figure 1, l'invention est relative à un atelier de fabrication additive comprenant une pluralité de machines de fabrication additive M1,M2,M3,M4 installées à l'intérieur d'une enceinte de confinement 10 de l'atelier.

Par enceinte de confinement 10, on entend une enceinte fermée de manière étanche et permettant d'empêcher la circulation de l'air présent à l'intérieur de l'enceinte vers l'extérieur de l'enceinte.

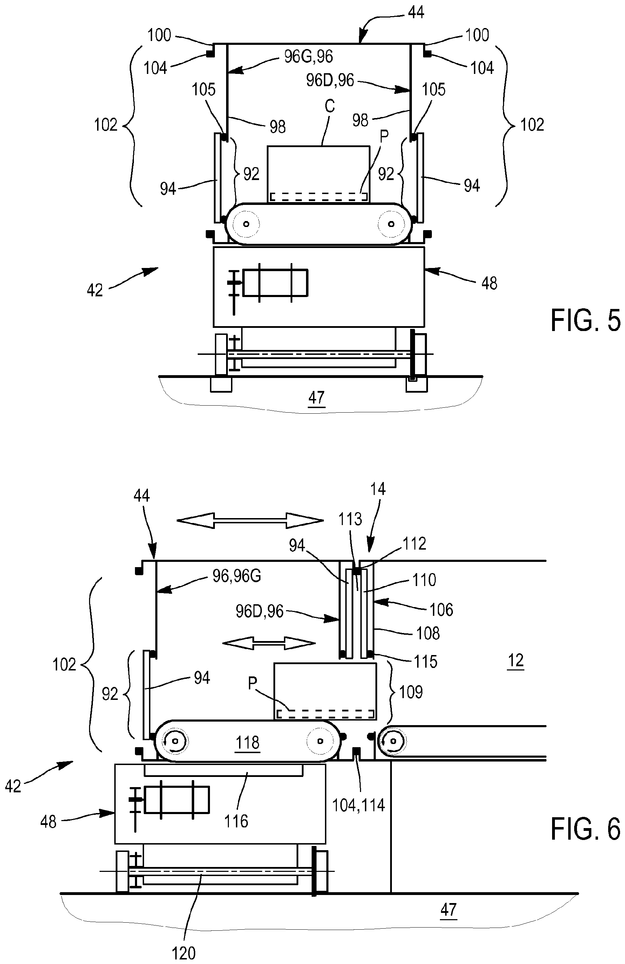

Comme cela est visible en figure 6, chaque machine M1,M2,M3,M4 comprend une enceinte de fabrication 12 et permet de fabriquer des pièces de manière automatisée et confinée à l'intérieur de cette enceinte 12. La fabrication est dite confinée car l'enceinte de fabrication 12 peut être fermée de manière étanche et de façon à empêcher la circulation d'air depuis l'intérieur de cette enceinte de fabrication 12 vers l'extérieur de cette enceinte, c'est-à-dire vers l'enceinte de confinement 10 de l'atelier.

Avantageusement, chaque machine M1,M2,M3,M4 peut comprendre plusieurs, et de préférence deux, zones de travail à l'intérieur de son enceinte de fabrication 12. Ainsi, chaque machine permet de fabriquer des pièces sur plusieurs plateaux de fabrication additive simultanément.

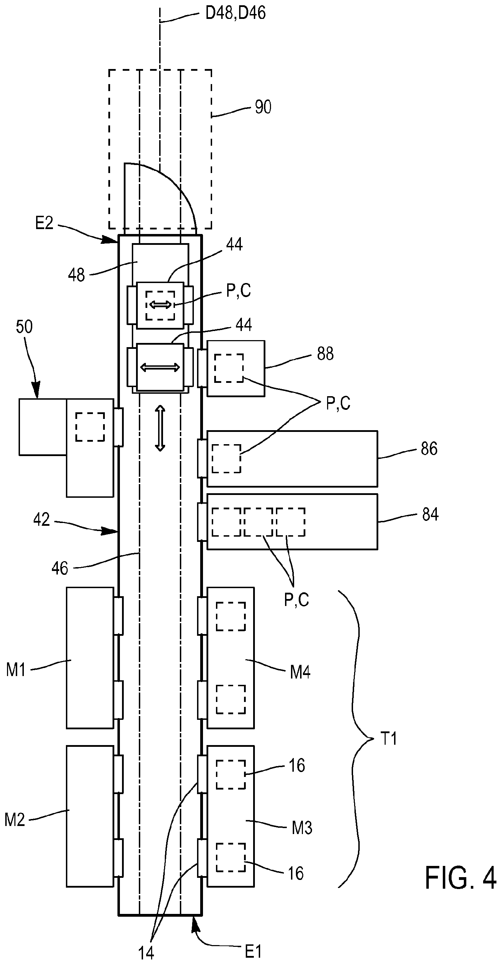

Comme le montre la figure 4, l'enceinte 12 de chaque machine M1,M2,M3,M4 peut comprendre autant de sas d'entrée/sortie 14 d'ensembles container/plateau de fabrication additive que de zones de travail 16, les ensembles container/plateau entrant et sortant de chaque zone de travail 16 par un sas d'entrée/sortie 14 dédié à cette zone de travail.

Afin d'alimenter de manière automatisée et confinée les différentes machines M1,M2,M3,M4 de l'atelier avec une poudre de fabrication additive prête à être utilisée en fabrication additive, l'atelier comprend à l'intérieur de l'enceinte de confinement 10 un dispositif d'alimentation 18 et un circuit d'alimentation 20 en poudre. Ce circuit d'alimentation 20 relie le dispositif d'alimentation 18 aux différentes machines M1,M2,M3,M4 de l'atelier. Avantageusement, le dispositif d'alimentation 18 permet aussi de préparer la poudre avant de la distribuer aux machines, cette préparation comprenant par exemple des étapes de séchage et de tamisage de la poudre.

Le dispositif d'alimentation 18 comprenant de nombreux conduits reliant des dispositifs de traitement, de dosage et de contrôle du débit de poudre, ce dispositif d'alimentation 18 comprend de nombreuses jonctions par lesquelles des grains de poudre peuvent s'échapper. Comme certaines poudres de fabrication additive peuvent comprendre des composés toxiques, l'invention prévoit d'isoler le dispositif d'alimentation 18 du reste de l'atelier. A cet effet, le dispositif d'alimentation 18 est confiné dans une enceinte de protection 22 prévue à l'intérieur de l'enceinte de confinement 10 de l'atelier, le ou les conduits 24 du circuit d'alimentation 20 traversant une paroi 26 de cette enceinte de protection 22 de manière étanche. Afin de permettre au conduit 24 de traverser la paroi 26 de manière étanche, une ouverture est par exemple réalisée dans cette paroi 26 et des moyens d'étanchéité sont prévus au niveau de cette ouverture entre cette paroi 26 et ce conduit 24.

Toujours en vue de limiter les fuites de poudre dans l'enceinte de confinement 10 de l'atelier, le circuit d'alimentation 20 transporte la poudre par aspiration du dispositif d'alimentation 18 vers les machines M1,M2,M3,M4 de l'atelier.

Afin d'éviter aux opérateurs de devoir pénétrer dans l'enceinte de confinement 10 ou dans l'enceinte de protection 22 du dispositif d'alimentation 18 pour le réapprovisionner en poudre, il est prévu de réapprovisionner ce dispositif d'alimentation 18 depuis l'extérieur de l'enceinte de protection 22 et depuis l'extérieur de l'enceinte de confinement 10 de l'atelier. A cet effet, un local de réapprovisionnement 28 est prévu à l'extérieur de l'enceinte de confinement 10, un circuit de réapprovisionnent 30 permettant de relier un container de réapprovisionnement 32 placé dans ce local de réapprovisionnement 28 au dispositif d'alimentation 18. Comme le ou les conduits 24 du circuit d'alimentation 20, le ou les conduits 36 de ce circuit de réapprovisionnement 30 traversent de manière étanche la ou les parois 34 de l'enceinte de confinement 10 et de l'enceinte de protection 22.

Avantageusement, un circuit de récupération 38 de poudre relie chaque machine M1,M2,M3,M4 de l'atelier au dispositif d'alimentation 18 de manière à recycler et réutiliser la poudre de fabrication additive déposée en excès au sein de chaque machine de l'atelier. Ce circuit de récupération 38 transporte la poudre par aspiration des machines M1,M2,M3,M4 vers le dispositif d'alimentation 18, et le ou les conduits 40 du circuit de récupération 38 traversent la paroi 26 de l'enceinte de protection 22 de manière étanche.

Toujours dans l'enceinte de confinement 10 et en vue d'une automatisation complète de l'atelier, cet atelier comprend aussi un dispositif de convoyage 42 d'ensembles container/plateau C de fabrication additive.

Par ensemble container/plateau C de fabrication additive, on entend l'ensemble formé par un plateau de fabrication additive et un container de fabrication additive. Le container prend la forme d'une paroi entourant le plateau et il permet de transporter le plateau avec les pièces fabriquées et la poudre non consolidée qui les entoure.

En vue du convoyage de ces ensembles container/plateau C de fabrication additive, le dispositif de convoyage 42 comprend au moins une enceinte de convoyage 44 circulant entre les différentes machines M1,M2,M3,M4. Ce dispositif de convoyage 42 permet d'approvisionner de manière automatisée et confinée les différentes machines M1,M2,M3,M4 de l'atelier en plateaux P propres et de récupérer de manière automatisée et confinée les plateaux P ayant été utilisés par ces machines M1,M2,M3,M4, ainsi que les pièces fabriquées.

En variante ou en cas de besoin spécifique, le dispositif de convoyage 42 permet aussi de transporter de manière confinée des plateaux P seuls, c'est-à-dire sans container, mais avec ou sans les pièces fabriquées. Dans le cas où le dispositif de convoyage 42 est utilisé pour transporter des plateaux sans container mais avec les pièces fabriquées, les machines M1,M2,M3,M4 sont de préférence équipées de moyens permettant de récupérer la poudre non consolidée qui entoure les pièces fabriquées à la fin d'un cycle de fabrication additive.

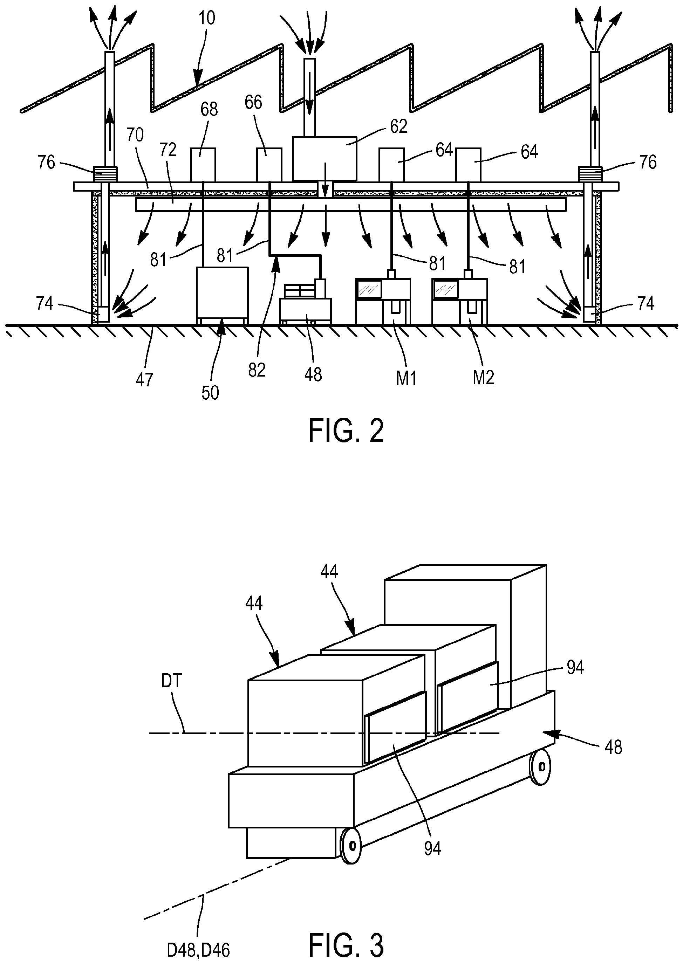

Plus en détail, le dispositif de convoyage 42 prend la forme d'une voie de circulation 46 s'étendant dans l'enceinte de confinement 10 de l'atelier et sur le sol 47 de cette enceinte 10, la ou les enceintes de convoyage 44 étant montées sur un chariot 48 apte à circuler sur cette voie 46, comme le montrent les figures 2 à 6.

De préférence, la voie de circulation 46 est rectiligne et les différentes machines M1,M2,M3,M4 de l'atelier sont réparties de part et d'autre d'un premier tronçon T1 de cette voie de circulation 46. Toujours de préférence, ce premier tronçon T1 se situe à une première extrémité E1 de la voie de de circulation 46 du dispositif de convoyage 42.

Toujours dans l'enceinte de confinement 10 et en vue d'une automatisation complète de l'atelier, l'atelier comprend un dispositif de nettoyage 50 comprenant au moins une enceinte de nettoyage 52 et permettant de nettoyer de manière automatisée et confinée les plateaux P de fabrication additive, et aussi les pièces fabriquées, dans cette enceinte de nettoyage 52. Avantageusement, seuls les plateaux P et les pièces fabriquées nécessitent un nettoyage car ils sont destinés à être extraits de l'enceinte de confinement 10, contrairement aux containers qui demeurent dans l'enceinte de confinement 10.

Dans une variante préférée, le dispositif de nettoyage 50 comprend une première enceinte de nettoyage à sec 52 et une seconde enceinte de nettoyage humide 54, ainsi qu'un convoyeur 56 permettant de transporter les plateaux P d'une enceinte à l'autre. Avantageusement, l'enceinte de nettoyage humide 54 se situe à proximité d'un sas d'entrée/sortie 58 permettant d'introduire les plateaux P de fabrication additive dans l'enceinte de confinement 10 et d'extraire les plateaux P de l'enceinte de confinement 10, un second convoyeur 60 de plateaux P étant prévu entre cette enceinte de nettoyage humide 54 et ce sas 58.

Dans un mode de réalisation préféré de l'atelier, le dispositif de nettoyage 50 et le sas d'entrée/sortie 58 des plateaux P se situent à la seconde extrémité E2 de la voie de de circulation 46 rectiligne du dispositif de convoyage 42.

Afin d'optimiser le confinement des ensembles container/plateau C dans les différentes enceintes des différentes machines et dispositifs de l'atelier, l'atelier comprend un dispositif 62 permettant de contrôler la pression de l'air à l'intérieur de l'enceinte de confinement 10 de l'atelier, des dispositifs 64 permettant de contrôler la pression de l'air à l'intérieur des enceintes de fabrication 12 des machines de fabrication additive M1,M2,M3,M4, un dispositif 66 permettant de contrôler la pression de l'air à l'intérieur de chaque enceinte de convoyage 44 du dispositif de convoyage 42, et un dispositif 68 permettant de contrôler la pression de l'air à l'intérieur d'au moins une enceinte de nettoyage 52,54 du dispositif de nettoyage 50. Grâce à ces différents dispositifs 62,64,66 et 68, il est possible de maintenir l'air dans les enceintes 12,44,52 et 54 à des pressions inférieures ou égales à la pression de l'air dans l'enceinte de confinement 10. On limite ainsi les éventuelles fuites de grains de poudre toxique de ces enceintes 12,44,52 et 54 vers l'enceinte de confinement 10.

Avantageusement, le dispositif 62 permet aussi de traiter l'air avant de l'introduire à l'intérieur de l'enceinte de confinement 10 de l'atelier. Par exemple, le dispositif 62 permet de filtrer et de contrôler la température et l'humidité de l'air prélevé à l'extérieur l'enceinte de confinement 10 avant de l'introduire à l'intérieur de celle-ci.

Afin de pouvoir gérer l'inertage des enceintes de fabrication 12 et de convoyage 44, les dispositifs 64 permettent aussi de contrôler la composition gazeuse de l'air introduit à l'intérieur des enceintes de fabrication 12 des machines de fabrication additive M1,M2,M3,M4, et le dispositif 66 permet aussi de contrôler la composition gazeuse de l'air introduit à l'intérieur de chaque enceinte de convoyage 44 du dispositif de convoyage 42. Plus précisément, les dispositifs 64 et 66 permettent de contrôler le taux d'oxygène de l'air introduit dans les enceintes auxquelles ces dispositifs sont reliés. En prévoyant un inertage de chaque enceinte de convoyage 44, il n'est plus nécessaire que les machines M1,M2,M3,M4 soient équipées d'un sas d'inertage et on évite d'inerter à nouveau l'air présent dans chaque enceinte de fabrication après chaque entrée/sortie d'un ensemble container/plateau C. Avantageusement, les dispositifs 64 et 66 permettent aussi de gérer depuis l'extérieur de l'enceinte de confinement 10 le désinertage des enceintes auxquelles ils sont reliés.

De préférence, l'ensemble de ces différents dispositifs 62,64,66 et 68 sont situés à l'extérieur de l'enceinte de confinement 10 de l'atelier. Ainsi, ces dispositifs n'encombrent pas le volume utile de l'enceinte de confinement 10 et il est possible d'intervenir sur ces dispositifs sans devoir pénétrer dans l'enceinte de confinement 10 avec les équipements de protection requis. De plus, en étant situés à l'extérieur de l'enceinte de confinement 10 de l'atelier, ces différents dispositifs 62,64,66 et 68 ne nécessitent pas de dépollutions régulières.

En vue de favoriser l'évacuation de grains ou de particules de poudre de fabrication additive de forte densité, il est prévu une circulation d'air descendante dans l'enceinte de confinement 10 de l'atelier. A cet effet, le plafond 70 de l'enceinte de confinement 10 est équipé d'au moins un aérateur 72 par lequel de l'air est introduit dans l'enceinte de confinement, et au moins un extracteur d'air 74 par lequel l'air est extrait de l'enceinte de confinement 10 est prévu au ras du sol 47 de l'enceinte de confinement. Plus en détail, l'aérateur 72, prenant par exemple la forme d'une rampe d'aération, est relié au dispositif 62 de contrôle de la pression et de la composition de l'air à l'intérieur de l'enceinte de confinement 10 de l'atelier, et chaque extracteur d'air 74 est relié à un dispositif de filtration 76 permettant de filtrer l'air avant de le rejeter hors de l'enceinte de confinement 10.

En vue du pilotage de leur fonctionnement depuis l'extérieur de l'enceinte de confinement 10 de l'atelier, chaque machine de fabrication additive M1,M2,M3,M4, ainsi que le dispositif de nettoyage 50 et le dispositif de convoyage 42 comprennent chacun une interface de gestion 78 se situant à l'extérieur de l'enceinte de confinement 10 de l'atelier. De préférence, une unique interface de gestion 78 est commune aux différentes machines et aux différents dispositifs précités. Comme le montre la figure 1, cette interface de gestion commune 78 peut être installée dans une cellule de supervision 80 située à l'extérieur de l'enceinte de confinement 10,

Afin de limiter les surfaces sur lesquelles peuvent se déposer des grains de poudre non consolidée au-dessus du sol 47 de l'enceinte de confinement 10, et comme l'interface de gestion 78 et les moyens d'alimentation en air, comme les dispositifs 64,66 et 68, et/ou en énergie électrique et/ou en énergie pneumatique des machines de fabrication additive M1,M2,M3,M4, du dispositif de nettoyage 50 et du dispositif de convoyage 42 se situent à l'extérieur de l'enceinte de confinement 10 de l'atelier, les liaisons informatiques, par exemple câblées, des machines de fabrication additives M1,M2,M3,M4, du dispositif de nettoyage 50 et du dispositif de convoyage 42 avec leur interface de gestion 78 et leurs liaisons, par exemple des conduits et des câbles 81, avec leurs moyens d'alimentation en air et/ou en énergie électrique et/ ou en énergie pneumatique s'étendent entre le sommet de ces machines et de ces dispositifs et le plafond 70 de l'enceinte de confinement. Le dispositif de convoyage 42 étant mobile, il est relié à son interface de gestion 78 et à ses moyens d'alimentation via une chaîne porte-câbles 82.

Afin de réguler les flux des ensembles container/plateau C entre les machines M1,M2,M3,M4 et le dispositif de nettoyage 50, il est prévu deux dispositifs 84 et 86 de stockage d'ensembles container/plateau C. Les enceintes de ces dispositifs de stockage sont destinées à être mises en communication avec la ou les enceintes de convoyage 44 du dispositif de convoyage 42. Pour éviter une contamination des plateaux P propres, un de ces dispositifs 84 est dédié au stockage d'ensembles container/plateau C contenant des plateaux P propres et l'autre dispositif 86 est dédié au stockage des ensembles container/plateau C contenant des plateaux P à nettoyer. Avantageusement, il peut aussi être prévu d'inerter les enceintes de stockage de ces dispositifs 84,86 et de contrôler la pression de l'air à l'intérieur de ces enceintes. De préférence, ces deux dispositifs 84 et 86 de stockage se situent vers le centre de la voie de circulation 46 du dispositif de convoyage 42, entre les machines M1,M2,M3,M4 et le dispositif de nettoyage 50.

Afin de permettre une extraction manuelle d'un plateau P ou d'un ensemble container/plateau C endommagé ou défectueux, un sas de maintenance 88 est prévu le long de la voie de de circulation 46 du dispositif de convoyage 42. L'enceinte de ce sas de maintenance 88 est destinée à être mise en communication avec la ou les enceintes de convoyage 44 du dispositif de convoyage 42. De préférence, ce sas de maintenance 88 se situe à la seconde extrémité E2 de la voie de de circulation 46 du dispositif de convoyage 42.

Toujours à la seconde extrémité E2 de la voie de de circulation 46 du dispositif de convoyage 42, et en bout de cette voie 46, il est prévu une zone de maintenance 90 permettant de réaliser différentes opérations de maintenance sur le chariot 48 du dispositif de convoyage 42, comme le remplacement d'une enceinte de convoyage 44 par exemple.

En complément aux différentes enceintes de confinement et aux différents dispositifs de traitement et de circulation d'air qui viennent d'être décrits, l'invention prévoit aussi un procédé visant à améliorer le confinement des ensembles container/plateau C, et donc des plateaux P, transportés et utilisés dans les différentes enceintes des différents dispositifs et machines de l'atelier.

Premièrement, et afin de protéger l'environnement extérieur à l'atelier comme par exemple les autres ateliers d'une usine, le procédé de confinement prévoit que l'air situé à l'intérieur de l'enceinte de confinement 10 est maintenu à une pression inférieure à l'air situé à l'extérieur de l'enceinte de confinement. Ainsi, on évite les éventuelles fuites de grains de poudre de fabrication additive vers l'extérieur de l'atelier.

Ensuite, comme chaque enceinte de convoyage 44 est destinée à être mise en communication les enceintes de fabrication 12 des différentes machines M1,M2,M3,M4, le procédé de confinement prévoit que la pression de l'air situé à l'intérieur de chaque enceinte de convoyage 44 est sensiblement égale à la pression de l'air situé dans l'enceinte de fabrication 12 de chaque machine de fabrication additive M1,M2,M3,M4.

Afin d'éviter un nouvel inertage de l'enceinte de fabrication 12 d'une machine de fabrication additive M1,M2,M3,M4 après chaque extraction et introduction d'un ensemble container/plateau C de fabrication additive, le procédé de confinement prévoit aussi que la composition de l'air situé à l'intérieur de chaque enceinte de convoyage 44 est maintenue sensiblement identique à la composition de l'air situé dans l'enceinte de fabrication 12 de chaque machine de fabrication additive M1,M2,M3,M4, notamment en ce qui concerne la proportion d'oxygène et de gaz inerte tel l'azote dans cet air.

En vue d'optimiser le confinement de l'enceinte de nettoyage à sec 52 du dispositif de nettoyage 50, le procédé de confinement prévoit que la pression de l'air à l'intérieur de l'enceinte de nettoyage à sec 52 est maintenue inférieure à la pression de l'air maintenue dans l'enceinte de confinement 10 de l'atelier.

Enfin, et en vue d'optimiser le confinement du dispositif d'alimentation 18 dans son enceinte de protection 22 prévue à l'intérieur de l'enceinte de confinement 10 de l'atelier, le procédé de confinement prévoit que la pression de l'air à l'intérieur de l'enceinte de protection 22 est maintenue inférieure à la pression de l'air maintenue à l'intérieur de l'enceinte de confinement 10.

Parallèlement à la complète automatisation de l'atelier de fabrication additive et au confinement des ensembles container/plateau C dans différentes enceintes, l'invention est aussi relative à un dispositif de convoyage 42 de ces ensembles container/plateau C de fabrication additive.

Comme le montrent les figures 3 à 6, le dispositif de convoyage 42 comprend au moins deux enceintes de convoyage 44 d'un ensemble container/plateau C de fabrication additive. Chaque enceinte de convoyage 44 comprend au moins une ouverture 92 autorisant l'entrée/sortie d'un ensemble container/plateau C de fabrication additive, et chaque ouverture 92 est munie d'une porte 94 permettant de refermer l'enceinte de convoyage 44 de manière étanche.

En étant associée au chariot 48 et à la voie de circulation 46 du dispositif de convoyage 42, les deux enceintes de convoyage 44 permettent de transporter des ensembles container/plateau C de fabrication additive, et donc des plateaux P de fabrication additive, de manière confinée et automatisée entre les différentes machines M1,M2,M3,M4 et les différents dispositifs 50,84,86,88 de l'atelier. De plus, en permettant de transporter séparément les plateaux P propres et ceux à nettoyer, les deux enceintes de convoyage 44 permettent de préserver la propreté des plateaux P propres jusqu'à leur mise en place et leur utilisation au sein de l'enceinte de fabrication 12 d'une machine de fabrication additive.

Afin d'assurer au mieux l'étanchéité entre une enceinte de convoyage 44 et l'enceinte de fabrication 12 d'une machine M1,M2,M3,M4 lors du transfert d'un ensemble container/plateau C entre ces deux enceintes, chaque paroi 96 d'une enceinte de convoyage munie d'une ouverture 92 d'entrée/sortie d'un ensemble container/plateau C de fabrication additive prend la forme d'une double paroi comprenant une paroi interne 98 et une paroi externe 100 chacune traversée par une ouverture 92,102 d'entrée/sortie d'un ensemble container/plateau C de fabrication additive, l'ouverture 92 de la paroi interne 98 étant équipée d'une porte 94 permettant de refermer cette paroi interne 98, et donc l'enceinte de convoyage 44, de manière étanche, tandis que l'ouverture 102 de la paroi externe 100 est équipée d'un joint d'étanchéité périphérique 104. De préférence, un joint d'étanchéité périphérique 105 est aussi prévu entre la porte 94 et la paroi interne 98. En vue de la réalisation de l'étanchéité entre une enceinte de convoyage 44 et l'enceinte de fabrication 12 d'une machine de fabrication additive M1,M2,M3,M4, l'ouverture 102 s'étend de préférence sur toute la surface de la paroi externe 100.

Idéalement, et comme le montre la figure 6, la paroi 106 d'une enceinte de fabrication 12 destinée à être mise en contact avec la paroi 96 d'une enceinte de convoyage 44 prend aussi la forme d'une double paroi avec une paroi interne 108 et une paroi externe 112. La paroi interne 108 comprend une ouverture 109 refermée par une porte 110, un joint d'étanchéité périphérique 115 étant prévu entre la porte 110 et la paroi interne 108, et une paroi externe 112 avec une ouverture 113 équipée d'un joint périphérique 114.

Avantageusement, chaque enceinte de convoyage 44 du dispositif de convoyage 42 est équipée d'un actionneur 116, tel un système à crémaillère, permettant de déplacer cette enceinte de convoyage 44 latéralement par rapport au chariot 48. Ainsi, lors du transfert d'un ensemble container/plateau C entre une enceinte de convoyage 44 et une enceinte de fabrication 12, la paroi 96 de l'enceinte de convoyage 44 est mise en appui contre la paroi 106 de l'enceinte de fabrication 12, et les joints 104,114 des parois externes 100,112 sont mis en compression l'un contre l'autre de manière à assurer l'étanchéité de la communication entre ces deux enceintes.

Pour des raisons d'encombrement et pour faciliter l'accostage des enceintes de convoyage 44 et de fabrication 12, les portes 94 des enceintes de convoyage 44 et les portes 110 des enceintes de fabrication 12 sont coulissantes.

Dans un mode de réalisation du dispositif de convoyage 42 optimisé vis-à-vis de la voie de circulation 46 rectiligne et de l'agencement linéaire de l'atelier, chaque enceinte de convoyage 44 comprend au moins deux parois latérales 96D,96G opposées, et chacune de ces parois latérales 96D,96G opposées comprend une ouverture 92 d'entrée/sortie d'un ensemble container/plateau C de fabrication additive munie d'une porte 94 permettant de refermer l'enceinte de convoyage 44 de manière étanche. Ainsi, les enceintes de convoyage 44 permettent de conduire des ensembles container/plateau C à des machines M1,M2,M3,M4 et à différents dispositifs 50,84,86,88 disposés de part et d'autre de la voie de circulation 46.

Toujours dans un mode de réalisation du dispositif de convoyage 42 optimisé vis-à-vis de la voie de circulation 46 rectiligne et de l'agencement linéaire de l'atelier, le dispositif de convoyage 42 comprenant un chariot 48 sur lequel sont montées les enceintes de convoyage 44, les enceintes de convoyage 44 sont juxtaposées sur le chariot 48 de façon que chaque ouverture 92 d'une enceinte de convoyage 44 se retrouve juxtaposée à l'ouverture 92 d'une autre enceinte de convoyage.

Le chariot 48 s'étendant dans une direction longitudinale D48 parallèle à la direction D46 de la voie de circulation 46 sur laquelle il circule, les enceintes de convoyage 44 sont ouvertes dans une direction transversale DT perpendiculaire à la direction longitudinale D48 du chariot 48, et de préférence de part et d'autre de cette direction longitudinale D48. Aussi, lorsqu'un actionneur 116 déplace une enceinte de convoyage 44 latéralement par rapport au chariot 48, il la déplace dans cette direction transversale DT.

Outre l'actionneur 116 qui permet de déplacer une enceinte de convoyage 44 transversalement, chaque enceinte de convoyage 44 comprend un convoyeur interne 118 permettant de déplacer un ensemble container/plateau C de fabrication additive ou un plateau P en translation au travers de chaque ouverture 92 de cette enceinte. Plus précisément, ce convoyeur interne 118 permet de déplacer un ensemble container/plateau C ou un plateau P dans la direction transversale DT perpendiculaire à la direction longitudinale D48 du chariot 48.

En vue de déplacements autonomes du chariot 48 le long de la voie de circulation 46, au moins un essieu 120 de ce chariot 48 est motorisé.

Avantageusement, le dispositif de convoyage 42 et ses enceintes de convoyage 44 peuvent être utilisés pour transporter des plateaux P seuls ou avec les pièces fabriquées.

D'un point de vue plus général, l'invention concerne aussi un procédé de convoyage d'un ensemble container/plateau C ou de plateaux P de fabrication additive au sein d'un atelier de fabrication additive comprenant une pluralité de machines de fabrication additive M1,M2,M3,M4.

Selon l'invention, ce procédé de convoyage prévoit que les ensembles container/plateau C ou les plateaux P de fabrication additive sont transportés de manière automatisée et confinée au sein de cet atelier, c'est-à-dire au sein de l'enceinte de confinement 10 de cet atelier, entre les différentes machines M1,M2,M3,M4 et les différents dispositifs 50,84,86,88 présents au sein de cette enceinte.

Avantageusement, ce procédé de convoyage prévoit aussi que les ensembles container/plateau C ou les plateaux P de fabrication additive sont transportés de manière automatisée et confinée sous atmosphère contrôlée au sein de cet atelier, et notamment en contrôlant la proportion d'oxygène et de gaz inerte tel l'azote dans l'air présent à l'intérieur des enceintes de convoyage 44, par exemple grâce au dispositif 66 et aux liaisons 81,82.

Enfin, et notamment grâce à la présence de deux enceintes de convoyage 44, le procédé prévoit que les plateaux P propres sont convoyés dans une enceinte de convoyage différente de l'enceinte de convoyage utilisée pour convoyer les plateaux P ayant été utilisés par les machines de fabrication additives M1,M2,M3,M4. De préférence, une enceinte de convoyage 44 est dédiée au transport des plateaux P propres, et l'autre enceinte 44 du dispositif de convoyage 42 est dédiée au transport des plateaux P ayant été utilisés en fabrication additive.

Grâce à la complète automatisation du transport des ensembles container/plateau C ou des plateaux P de fabrication additive au sein de l'atelier et à la présence des dispositifs de stockage 84 et 86, on maximise le temps d'utilisation effectif des machines M1,M2,M3,M4 de fabrication additive. De même, l'externalisation et la mutualisation du nettoyage des plateaux P et de l'alimentation en poudre permet de maximiser le temps d'utilisation effectif des machines M1,M2,M3,M4 de fabrication additive, notamment en comparaison des machines de l'art antérieur intégrant des moyens internes de nettoyage des plateaux et de recyclage de poudre.

## Revendications

1. Atelier de fabrication additive à fonctionnement automatisé et confiné, l'atelier étant **caractérisé en ce qu'**il comprend une enceinte de confinement (10) à l'intérieur de laquelle est installée une pluralité de machines de fabrication additive (M1,M2,M3,M4), chaque machine (M1,M2,M3,M4) comprenant une enceinte de fabrication (12) et permettant de fabriquer des pièces de manière automatisée et confinée à l'intérieur de cette enceinte, l'atelier comprenant en outre à l'intérieur de l'enceinte de confinement (10) un dispositif d'alimentation (18) et un circuit d'alimentation (20) permettant d'alimenter de manière automatisée et confinée les différentes machines (M1,M2,M3,M4) de l'atelier avec une poudre de fabrication additive prête à être utilisée en fabrication additive, un dispositif de convoyage (42) d'ensembles container/plateau (C) de fabrication additive comprenant au moins une enceinte de convoyage (44) circulant entre les différentes machines (M1,M2,M3,M4) afin d'approvisionner de manière automatisée et confinée les différentes machines de l'atelier en plateaux (P) propres et afin de récupérer de manière automatisée et confinée les plateaux (P) ayant été utilisés par ces machines ainsi que les pièces fabriquées, et un dispositif de nettoyage (50) comprenant au moins une enceinte de nettoyage (52) et permettant de nettoyer de manière automatisée et confinée les plateaux de fabrication additive dans cette enceinte de nettoyage (52), le dispositif d'alimentation (18) étant confiné dans une enceinte de protection (22) prévue à l'intérieur de l'enceinte de confinement (10) de l'atelier, et le ou les conduits (24) du circuit d'alimentation (20) traversant une paroi (26) de cette enceinte de protection (22) de manière étanche.

2. Atelier de fabrication additive selon la revendication 1, dans lequel l'atelier comprend un dispositif (62) permettant de contrôler la pression de l'air à l'intérieur de l'enceinte de confinement (10) de l'atelier, des dispositifs (64) permettant de contrôler la pression de l'air à l'intérieur des enceintes de fabrication (12) des machines de fabrication additive (M1,M2,M3,M4), un dispositif (66) permettant de contrôler la pression de l'air à l'intérieur de chaque enceinte de convoyage (44) du dispositif de convoyage (42), et un dispositif (68) permettant de contrôler la pression de l'air à l'intérieur d'au moins une enceinte de nettoyage (52,54) du dispositif de nettoyage (50).

3. Atelier de fabrication additive selon l'une des revendications précédentes, dans lequel le plafond (70) de l'enceinte de confinement (10) est équipé d'au moins un aérateur (72) par lequel de l'air est introduit dans l'enceinte de confinement, et au moins un extracteur d'air (74) par lequel l'air est extrait de l'enceinte de confinement (10) est prévu au ras du sol (47) de l'enceinte de confinement.

4. Atelier de fabrication additive selon l'une des revendications précédentes, dans lequel chaque machine de fabrication additive (M1,M2,M3,M4), ainsi que le dispositif de nettoyage (50) et le dispositif de convoyage (42) comprennent chacun une interface de gestion (78) se situant à l'extérieur de l'enceinte de confinement (10) de l'atelier.

5. Atelier de fabrication additive selon l'une des revendications précédentes, dans lequel, l'interface de gestion (78) et les moyens d'alimentation en air et/ou en énergie électrique et/ou en énergie pneumatique des machines de fabrication additive (M1,M2,M3,M4), du dispositif de nettoyage (50) et du dispositif de convoyage (42) se situant à l'extérieur de l'enceinte de confinement (10) de l'atelier, les liaisons informatiques des machines de fabrication additive (M1,M2,M3,M4), du dispositif de nettoyage (50) et du dispositif de convoyage (42) avec leur interface de gestion (78) et leurs liaisons (81,82) avec leurs moyens d'alimentation en air et/ou en énergie électrique et/ ou en énergie pneumatique s'étendent entre le sommet de ces machines et de ces dispositifs et le plafond (70) de l'enceinte de confinement.

6. Procédé de confinement d'un atelier de fabrication additive comprenant une enceinte de confinement (10) à l'intérieur de laquelle est installé une pluralité de machines de fabrication additive (M1,M2,M3,M4), chaque machine (M1,M2,M3,M4) comprenant une enceinte de fabrication (12) et permettant de fabriquer des pièces de manière automatisée et confinée à l'intérieur de cette enceinte, l'atelier comprenant en outre à l'intérieur de l'enceinte de confinement (10) un dispositif d'alimentation (18) et un circuit d'alimentation (20) permettant d'alimenter de manière automatisée et confinée les différentes machines (M1,M2,M3,M4) de l'atelier avec une poudre de fabrication additive prête à être utilisée en fabrication additive, un dispositif de convoyage (42) d'ensembles container/plateau (C) de fabrication additive comprenant au moins une enceinte de convoyage (44) circulant entre les différentes machines (M1,M2,M3,M4) afin d'approvisionner de manière automatisée et confinée les différentes machines de l'atelier en plateaux (P) propres et afin de récupérer de manière automatisée et confinée les plateaux (P) ayant été utilisés par ces machines ainsi que les pièces fabriquées, et un dispositif de nettoyage (50) comprenant au moins une enceinte de nettoyage (52) et permettant de nettoyer de manière automatisée et confinée les plateaux (P) de fabrication additive dans cette enceinte de nettoyage (52), le procédé de confinement étant **caractérisé en ce que** l'air situé à l'intérieur de l'enceinte de confinement (10) est maintenu à une pression inférieure à l'air situé à l'extérieur de l'enceinte de confinement.

7. Procédé de confinement d'un atelier de fabrication additive selon la revendication 6, dans lequel la pression de l'air situé à l'intérieur de chaque enceinte de convoyage (44) est égale à la pression de l'air situé dans l'enceinte de fabrication (12) de chaque machine de fabrication additive (M1,M2,M3,M4).

8. Procédé de confinement d'un atelier de fabrication additive selon la revendication 6 ou la revendication 7, dans lequel la composition de l'air situé à l'intérieur de chaque enceinte de convoyage (44) est maintenue identique à la composition de l'air situé dans l'enceinte de fabrication (12) de chaque machine de fabrication additive (M1,M2,M3,M4).

9. Procédé de confinement d'un atelier de fabrication additive selon l'une des revendications 6 à 8, dans lequel, le dispositif de nettoyage (50) comprenant une enceinte de nettoyage à sec (52), la pression de l'air à l'intérieur de l'enceinte de nettoyage à sec (52) est maintenue inférieure à la pression de l'air maintenue dans l'enceinte de confinement (10) de l'atelier.

10. Procédé de confinement d'un atelier de fabrication additive selon l'une des revendications 6 à 9, dans lequel, le dispositif d'alimentation (18) étant confiné dans une enceinte de protection (22) prévue à l'intérieur de l'enceinte de confinement (10) de l'atelier, la pression de l'air à l'intérieur de l'enceinte de protection (22) est maintenue inférieure à la pression de l'air maintenue à l'intérieur de l'enceinte de confinement (10).

## Patentansprüche

1. Additive Fertigungsanlage mit automatisiertem und eingehaustem Betrieb, wobei die Anlage **dadurch gekennzeichnet ist, dass** sie eine Einhausung (10) umfasst, in der eine Mehrzahl von additiven Fertigungsmaschinen (M1,M2,M3,M4) eingerichtet ist, wobei jede Maschine (M1,M2,M3,M4) einen Fertigungsraum (12) umfasst und es gestattet, Teile automatisiert und eingehaust innerhalb dieses Raums zu fertigen, die Anlage ferner umfassend innerhalb der Einhausung (10) eine Zuführvorrichtung (18) und einen Zuführkreis (20), die es gestatten, die verschiedenen Maschinen (M1,M2,M3,M4) der Anlage automatisiert und eingehaust mit einem Pulver zur additiven Fertigung zu versorgen, das dafür bereit ist, in der additiven Fertigung genutzt zu werden, eine Fördervorrichtung (42) für Container/Platten-Anordnungen (C) zur additiven Fertigung, die mindestens ein Fördergehäuse (44) umfasst, das zwischen den verschiedenen Maschinen (M1,M2,M3,M4) zirkuliert, um die verschiedenen Maschinen der Anlage automatisiert und eingehaust mit sauberen Platten (P) zu versorgen und die Platten (P), die von diesen Maschinen benutzt wurden, sowie die gefertigten Teile automatisiert und eingehaust abzuholen, und eine Reinigungsvorrichtung (50), die mindestens einen Reinigungsraum (52) umfasst und es gestattet, die Platten für die additive Fertigung automatisiert und eingehaust in diesem Reinigungsraum (52) zu reinigen, wobei die Zuführvorrichtung (18) in einem Schutzgehäuse (22) eingehaust ist, das innerhalb der Einhausung (10) der Anlage vorgesehen ist und die Leitung oder Leitungen (24) des Zuführkreises (20) dicht durch eine Wand (26) dieses Schutzgehäuses (22) hindurchgeht bzw. hindurchgehen.

2. Additive Fertigungsanlage nach Anspruch 1, wobei die Anlage eine Vorrichtung (62) umfasst, die es gestattet, den Luftdruck innerhalb der Einhausung (10) der Anlage zu steuern, Vorrichtungen (64), die es gestatten, den Luftdruck innerhalb der Fertigungsräume (12) der additiven Fertigungsmaschinen (M1,M2,M3,M4) zu steuern, eine Vorrichtung (66), die es gestattet, dem Luftdruck innerhalb jedes Fördergehäuses (44) der Fördervorrichtung (42) zu steuern, und eine Vorrichtung (68), die es gestattet, den Luftdruck innerhalb mindestens eines Reinigungsraums (52,54) der Reinigungsvorrichtung (50) zu steuern.

3. Additive Fertigungsanlage nach einem der vorhergehenden Ansprüche, wobei die Decke (70) der Einhausung (10) mit mindestens einem Lüfter (72) ausgerüstet ist, durch welchen Luft in die Einhausung eingeführt wird, und mindestens ein Luftabzug (74), durch welchen die Luft aus der Einhausung (10) abgeführt wird, auf Höhe des Bodens (47) der Einhausung vorgesehen ist.

4. Additive Fertigungsanlage nach einem der vorhergehenden Ansprüche, wobei jede additive Fertigungsmaschine (M1,M2,M3,M4) sowie die Reinigungsvorrichtung (50) und die Fördervorrichtung (42) jeweils eine Verwaltungsschnittstelle (78) umfassen, die sich außerhalb der Einhausung (10) der Anlage befindet.

5. Additive Fertigungsanlage nach einem der vorhergehenden Ansprüche, wobei, die Verwaltungsschnittstelle (78) und die Mittel zur Versorgung mit Luft und/oder elektrischer Energie und/oder pneumatischer Energie der additiven Fertigungsmaschinen (M1,M2,M3,M4), der Reinigungsvorrichtung (50) und der Fördervorrichtung (42) sich außerhalb der Einhausung (10) der Anlage befindend, sich die Datenverbindungen der additiven Fertigungsmaschinen (M1,M2,M3,M4), der Reinigungsvorrichtung (50) und der Fördervorrichtung (42) mit ihrer Verwaltungsschnittstelle (78) und ihren Verbindungen (81,82) mit ihren Mitteln zur Versorgung mit Luft und/oder elektrischer Energie und/oder pneumatischer Energie zwischen dem höchsten Punkt dieser Maschinen und dieser Vorrichtungen und der Decke (70) der Einhausung erstrecken.

6. Verfahren zur Einhausung einer additiven Fertigungsanlage umfassend eine Einhausung (10), innerhalb welcher eine Mehrzahl von additiven Fertigungsmaschinen (M1,M2,M3,M4) eingerichtet ist, wobei jede Maschine (M1,M2,M3,M4) einen Fertigungsraum (12) umfasst und es gestattet, Teile automatisiert und eingehaust innerhalb dieses Raums zu fertigen, die Anlage ferner umfassend innerhalb der Einhausung (10) eine Zuführvorrichtung (18) und einen Zuführkreis (20), die es gestatten, die verschiedenen Maschinen (M1,M2,M3,M4) der Anlage automatisiert und eingehaust mit einem Pulver zur additiven Fertigung zu versorgen, das dafür bereit ist, in der additiven Fertigung genutzt zu werden, eine Fördervorrichtung (42) für Container/Platten-Anordnungen (C) zur additiven Fertigung, die mindestens ein Fördergehäuse (44) umfasst, das zwischen den verschiedenen Maschinen (M1,M2,M3,M4) zirkuliert, um die verschiedenen Maschinen der Anlage automatisiert und eingehaust mit sauberen Platten (P) zu versorgen und die Platten (P), die von diesen Maschinen benutzt wurden, sowie die gefertigten Teile automatisiert und eingehaust abzuholen, und eine Reinigungsvorrichtung (50), die mindestens einen Reinigungsraum (52) umfasst und es gestattet, die Platten (P) für die additive Fertigung in diesem Reinigungsraum (52) automatisiert und eingehaust zu reinigen, wobei das Einhausungsverfahren **dadurch gekennzeichnet ist, dass** die Luft, die sich innerhalb der Einhausung (10) befindet, auf einem Druck gehalten wird, der niedriger als die Luft ist, die sich außerhalb der Einhausung befindet.

7. Verfahren zur Einhausung einer additiven Fertigungsanlage nach Anspruch 6, wobei der Druck der Luft, die sich außerhalb jedes Fördergehäuses (44) befindet, gleich dem Druck der Luft ist, die sich in dem Fertigungsraum (12) jeder additiven Fertigungsmaschine (M1,M2,M3,M4) befindet.

8. Verfahren zur Einhausung einer additiven Fertigungsanlage nach Anspruch 6 oder 7, wobei die Zusammensetzung der Luft, die sich innerhalb jedes Fördergehäuses (44) befindet, identisch mit der Zusammensetzung der Luft gehalten wird, die sich in dem Fertigungsraum (12) jeder additiven Fertigungsmaschine (M1,M2,M3,M4) befindet.

9. Verfahren zur Einhausung einer additiven Fertigungsanlage nach einem der Ansprüche 6 bis 8, wobei, die Reinigungsvorrichtung (50) umfassend einen Trockenreinigungsraum (52), der Luftdruck innerhalb des Trockenreinigungsraums (52) unter dem Luftdruck gehalten wird, der in der Einhausung (10) der Anlage gehalten wird.

10. Verfahren zur Einhausung einer additiven Fertigungsanlage nach einem der Ansprüche 6 bis 9, wobei der Luftdruck innerhalb des Schutzgehäuses (22) unter dem Luftdruck gehalten wird, der innerhalb der Einhausung (10) gehalten wird, wobei die Zuführvorrichtung (18) in einem Schutzgehäuse (22) eingehaust ist, das innerhalb der Einhausung (10) der Anlage vorgesehen ist.

## Claims

1. Additive manufacturing facility operating in an automated and contained manner, the facility being **characterized in that** it comprises a containment chamber (10) inside which a plurality of additive manufacturing machines (M1, M2, M3, M4) is installed, each machine (M1, M2, M3, M4) comprising a manufacturing chamber (12) and making it possible to manufacture parts in an automated and contained manner inside said chamber, the facility further comprising, inside the containment chamber (10), a supply device (18) and a supply circuit (20) for supplying, in an automated and contained manner, the various machines (M1, M2, M3, M4) of the facility with an additive manufacturing powder ready to be used in additive manufacturing, a conveying device (42) for conveying additive manufacturing container/tray assemblies (C) comprising at least one conveying chamber (44) circulating between the various machines (M1, M2, M3, M4) in order to supply, in an automated and contained manner, the various machines of the facility with clean trays (P) and to retrieve, in an automated and contained manner, the trays (P) that have been used by these machines along with the manufactured parts, and a cleaning device (50) comprising at least one cleaning chamber (52), for cleaning, in an automated and contained manner, the additive manufacturing trays in said cleaning chamber (52), the supply device (18) being contained within a protective chamber (22) provided inside the containment chamber (10) of the facility, and the conduit or conduits (24) of the supply circuit (20) passing through a wall (26) of said protective chamber (22) in a sealed manner.

2. Additive manufacturing facility according to Claim 1, wherein the facility comprises a device (62) for controlling the air pressure inside the containment chamber (10) of the facility, devices (64) for controlling the air pressure inside the manufacturing chambers (12) of the additive manufacturing machines (M1, M2, M3, M4), a device (66) for controlling the air pressure inside each conveying chamber (44) of the conveying device (42), and a device (68) for controlling the air pressure inside at least one cleaning chamber (52, 54) of the cleaning device (50).

3. Additive manufacturing facility according to one of the preceding claims, wherein the ceiling (70) of the containment chamber (10) is equipped with at least one ventilator (72) through which air is introduced into the containment chamber, and at least one air extractor (74) through which air is extracted from the containment chamber (10) is provided level with the floor (47) of the containment chamber.

4. Additive manufacturing facility according to one of the preceding claims, wherein each additive manufacturing machine (M1, M2, M3, M4), along with the cleaning device (50) and the conveying device (42), comprise a management interface (78) located outside the containment chamber (10) of the facility.

5. Additive manufacturing facility according to one of the preceding claims, wherein, as the management interface (78) and the means for supplying air and/or electrical power and/or pneumatic power to the additive manufacturing machines (M1, M2, M3, M4), the cleaning device (50) and the conveying device (42) are located outside the containment chamber (10) of the facility, the computer links connecting the additive manufacturing machines (M1, M2, M3, M4), the cleaning device (50) and the conveying device (42) to their management interface (78), and their connections (81, 82) to their means for supplying air and/or electrical power and/or pneumatic power, extend between the top of these machines and these devices and the ceiling (70) of the containment chamber.

6. Method for the containment of an additive manufacturing facility comprising a containment chamber (10) inside which a plurality of additive manufacturing machines (M1, M2, M3, M4) is installed, each machine (M1, M2, M3, M4) comprising a manufacturing chamber (12) and making it possible to manufacture parts in an automated and contained manner inside said chamber, the facility further comprising, inside the containment chamber (10) a supply device (18) and a supply circuit (20) for supplying, in an automated and contained manner, the various machines (M1, M2, M3, M4) of the facility with an additive manufacturing powder ready to be used in additive manufacturing, a conveying device (42) for conveying additive manufacturing container/tray assemblies (C) comprising at least one conveying chamber (44) circulating between the various machines (M1, M2, M3, M4) in order to supply, in an automated and contained manner, the various machines of the facility with clean trays (P) and to retrieve, in an automated and contained manner, the trays (P) that have been used by these machines along with the manufactured parts, and a cleaning device (50) comprising at least one cleaning chamber (52), for cleaning, in an automated and contained manner, the additive manufacturing trays (P) in said cleaning chamber (52), the containment method being **characterized in that** the air inside the containment chamber (10) is kept at a pressure below the air outside the containment chamber.

7. Method for the containment of an additive manufacturing facility according to Claim 6, wherein the air pressure inside each conveying chamber (44) is equal to the air pressure inside the manufacturing chamber (12) of each additive manufacturing machine (M1, M2, M3, M4).

8. Method for the containment of an additive manufacturing facility according to Claim 6 or Claim 7, wherein the composition of the air inside each conveying chamber (44) is kept identical to the composition of the air inside the manufacturing chamber (12) of each additive manufacturing machine (M1, M2, M3, M4).

9. Method for the containment of an additive manufacturing facility according to one of Claims 6 to 8, wherein, the cleaning device (50) comprising a dry cleaning chamber (52), the air pressure inside the dry cleaning chamber (52) is kept below the air pressure maintained inside the containment chamber (10) of the facility.

10. Method for the containment of an additive manufacturing facility according to one of Claims 6 to 9, wherein, the supply device (18) being contained in a protective chamber (22) provided inside the containment chamber (10) of the facility, the air pressure inside the protective chamber (22) is kept below the air pressure maintained inside the containment chamber (10).
